# FASCICULE DE BREVET EUROPEEN

(11) **EP 0 410 876 B1**
(45) Date de publication et mention de la délivrance du brevet: **02.02.1994**
(21) Numéro de dépôt: 90402134.2
(22) Date de dépôt: 25.07.1990
(51) Int. Cl.: A01N 57/20

(54) **Compositions insecticides renfermant comme principe actif le glufosinate ou l'un de ses sels**
Glufosinat oder eines seiner Salze als Wirkstoff enthaltende insektizide Zusammensetzungen
Insecticidal compositions containing as active principle glufosinate or a salt thereof

(30) Priorité: 26.07.1989 FR 8910062
(43) Date de publication de la demande: 30.01.1991
(73) Titulaire: ROUSSEL-UCLAF, 75007 Paris (FR)
(72) Inventeur: Benoit, Marc, F-13360 Roquevaire (FR); Demoute, Jean-Pierre, F-13390 Auriol (FR)
(74) Mandataire: Tonnellier, Marie-José

(56) Documents cités:
- EP-A- 0 009 022
- CHEMICAL PATENTS INDEX, BASIC ABSTRACTS JOURNAL, semaine B38, section C, 14 novembre 1979, Derwent Publications Ltd., Londres (GB); no. 68819#

## Description

La présente invention concerne l'utilisation du glufosinate ou de l'un de ses sels pour la fabrication de compositions insecticides destinées à la lutte contre les blattes et les fourmis.

Parmi les sels envisagés, on peut citer les sels d'ammonium, de sodium ou de potassium.

Le glufosinate ou acide DL-(homoalanin-4-yl) méthyl phosphinique de formule : 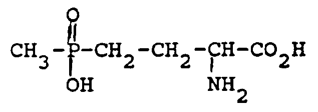
est un produit commercial bien connu ; voir à ce sujet The Pesticide Manual, a World Compendium 7è édition publié par The British Crop. Protection Council page 302.

Le sel d'ammonium du glufosinate est le principe actif du produit herbicide commercialisé sous le nom de marque BASTA.

Parmi les utilisations préférées de l'invention, on peut citer l'utilisation caractérisée en ce que le principe actif est le sel d'ammonium du glufosinate.

Parmi les utilisations de l'invention, on peut citer les utilisations caractérisées en ce que les compositions insecticides fabriquées se présentent sous forme de solutions aqueuses et renferment en outre un éther du propylène glycol, ou encore un ou plusieurs acides fluorés, ou encore un sel alcalin de lauryl éther sulfate.

Parmi les utilisations préférées on peut citer les utilisations caractérisées en ce que les compositions insecticides fabriquées se présentent sous forme aqueuse et renferment en outre 2 ou plus des constituants suivants : un éther du propylène glycol, un acide fluoré, un sel alcalin de l auryl sulfate éther.

Parmi les utilisations préférées, on peut citer tout particulièrement l'utilisation caractérisée en ce que le principe actif utilisé est le produit présenté sous la forme commerciale BASTA.

L'invention a tout particulièrement pour objet l'utilisation caractérisée en ce que les compositions fabriquées renferment une quantité de principe actif inférieure à 200 g/l par exemple une quantité de principe actif égale ou inférieure à 20 g/l. L'invention a notamment pour objet l'utilisation caractérisée en ce que les compositions fabriquées renferment une quantité de principe actif égale ou inférieure à 10 g/l, par exemple une quantité de principe actif égale ou inférieure à 1 g/l.

Parmi les utilisations préférées, on peut citer les utilisations caractérisées en ce que le principe actif est le glufosinate présenté sous la forme commerciale BASTA à des doses inférieures à 200 g/l par exemple égales ou inférieures à 20 g/l, et notamment celles inférieures à 10 g/l, par exemple celles égales ou inférieures à 1 g/l.

Les compositions fabriquées le sont selon les procédés usuels de l'industrie des insecticides.

Ces compositions peuvent se présenter sous les formes employées classiquement pour l'utilisation de ce genre de composés.

Ces compositions peuvent se présenter sous forme de poudres, granulés, suspensions, émulsions, solutions, solutions pour aérosols, bandes combustibles, appâts ou autres préparations employés classiquement pour l'utilisation de ce genre de composés.

Outre le principe actif, ces compositions contiennent, en général, un véhicule et/ou un agent tensio-actif, non ionique, assurant, en outre, une dispersion uniforme des substances constitutives du mélange. Le véhicule utilisé peut être un liquide, tel que l'eau, l'alcool, les hydrocarbures ou autres solvants organiques, une huile minérale, animale ou végétale.

On a ainsi obtenu des résultats particulièrement intéressants en incorporant le ou les principes actifs à de l'eau d'abreuvage ou dans des compositions alimentaires appelées appâts. L'invention a donc plus particulièrement pour objet l'utilisation caractérisée en ce que les compositions insecticides sont incorporées dans des compositions alimentaires appelées appâts, par exemple dans des appâts renfermant de 0,5 à 15 mg de glufosinate pour un appât de 1 g.

Les exemples suivants illustrent l'invention.

### Exemple 1 :

On a préparé une solution aqueuse de glufosinate à 10 g/l et incorporé 1 ml de cette solution dans 1 g de biscuit pour rongeur servant de nourriture à des blattes germaniques. Les blattes meurent progressivement dès le 4ème jour.

### Exemple 2 :

On a préparé une solution aqueuse de glufosinate à 10 g/l et donné cette solution comme eau d'abreuvage à des blattes germaniques. La mortalité est totale en 5 jours.

## Revendications

1. Utilisation du glufosinate ou de l'un de ses sels pour la fabrication de compositions insecticides destinées à la lutte contre les blattes et les fourmis.

2. Utilisation selon la revendication 1, caractérisée en ce que le principe actif est le sel d'ammonium du glufosinate.

3. Utilisation selon la revendication 1 ou 2, caractérisée en ce que les compositions insecticides fabriquées se présentent sous forme de solutions aqueuses et renferment en outre un éther du propylène glycol.

4. Utilisation selon la revendication 1 ou 2, caractérisée en ce que les compositions insecticides fabriquées se présentent sous forme aqueuse et renferment en outre un ou plusieurs acides fluorés.

5. Utilisation selon la revendication 1 ou 2, caractérisée en ce que les compositions insecticides fabriquées se présentent sous forme aqueuse et renferment en outre un sel alcalin de lauryl éther sulfate.

6. Utilisation selon la revendication 1 ou 2, caractérisée en ce que les compositions insecticides fabriquées se présentent sous forme aqueuse et renferment en outre 2 ou plus des constituants suivants : un éther du propylène glycol, un acide fluoré, un sel alcalin de l'auryl sulfate éther.

7. Utilisation selon la revendication 2, caractérisée en ce que le principe actif utilisé est le produit présenté sous la forme commerciale BASTA.

8. Utilisation selon l'une quelconque des revendications 1 à 7, caractérisée en que les compositions fabriquées renferment une quantité de principe actif inférieure à 200 g/l.

9. Utilisation selon la revendication 8, caractérisé en ce que les compositions fabriquées renferment une quantité de principe actif inférieure à 20 g/l.

10. Utilisation selon la revendication 9, caractérisée en ce que les compositions fabriquées renferment une quantité de principe actif inférieure à 10 g/l.

11. Utilisation selon la revendication 10, caractérisée en ce que les compositions fabriquées renferment une quantité de principe actif inférieure à 1 g/l.

12. Utilisation selon l'une quelconque des revendications 9, 10 ou 11, caractérisée en ce que le principe actif est le produit commercial BASTA.

13. Utilisation selon l'une quelconque des revendications 1 à 12, caractérisée en ce que les compositions insecticides sont incorporées dans des compositions alimentaires appelées appâts.

14. Utilisation selon la revendication 13 pour la préparation d'appâts, caractérisée en ce que les appâts renferment de 0,5 à 15 mg de glufosinate pour un appât de 1 g.

## Claims

1. Use of glufosinate or one of its salts for the production of insecticide compositions intended to combat cockroaches and ants.

2. Use according to claim 1, characterized in that the active ingredient is the ammonium salt of glufosinate.

3. Use according to claim 1 or 2, characterized in that the insecticide compositions produced appear in aqueous form and in addition contain a propylene glycol ether.

4. Use according to claim 1 or 2, characterized in that the insecticide compositions produced appear in aqueous form and in addition contain one or more fluorine-containing acids.

5. Use according to claim 1 or 2, characterized in that the insecticide compositions produced appear in aqueous form and in addition contain an alkaline salt of lauryl ether sulphate.

6. Use according to claim 1 or 2, characterized in that the insecticide compositions produced appear in aqueous form and in addition contain two or more of the following constituents: a propylene glycol ether, a fluorine-containing acid, an alkaline salt of lauryl ether sulphate.

7. Use according to claim 2, characterized in that the active ingredient used is the product presented in the commercial form BASTA.

8. Use according to one any of claims 1 to 7, characterized in that the compositions produced contain a quantity of active ingredient which is lower than 200 g/l.

9. Use according to claim 8, characterized in that the compositions produced contain a quantity of active ingredient which is lower than 20 g/l.

10. Use according to claim 9, characterized in that the compositions produced contain a quantity of active ingredient which is lower than 10 g/l.

11. Use according to claim 10, characterized in that the compositions produced contain a quantity of active ingredient which is lower than 1 g/l.

12. Use according to any one of claims 9, 10 or 11, characterized in that the active ingredient is the commercial product BASTA.

13. Use according to any one of claims 1 to 12, characterized in that the insecticide compositions are incorporated in food compositions called baits.

14. Use according to claim 13 for the preparation of baits, characterized in that the baits contain 0.5 to 15 mg of glufosinate for a bait of 1 g.

## Patentansprüche

1. Verwendung von Glufosinat oder einem seiner Salze für die Herstellung insektizider Zusammensetzungen zur Bekämpfung von Schaben und Ameisen.

2. Verwendung gemäß Anspruch 1, dadurch gekennzeichnet, daß der Wirkstoff das Ammoniumsalz von Glufosinat ist.

3. Verwendung gemäß Anspruch 1 oder 2, dadurch gekennzeichnet, daß die hergestellten insektiziden Zusammensetzungen in Form wäßriger Lösungen vorliegen, die außerdem einen Propylenglykolether enthalten.

4. Verwendung gemäß Anspruch 1 oder 2, dadurch gekennzeichnet, daß die hergestellten insektiziden Zusammensetzungen in wäßriger Form vorliegen und außerdem eine oder mehrere fluorierte Säuren enthalten.

5. Verwendung gemäß Anspruch 1 oder 2, dadurch gekennzeichnet, daß die hergestellten insektiziden Zusammensetzungen in wäßriger Form vorliegen und außerdem ein Alkalisalz von Laurylethersulfat enthalten.

6. Verwendung gemäß Anspruch 1 oder 2, dadurch gekennzeichnet, daß die hergestellten insektiziden Zusammensetzungen in wäßriger Form vorliegen und außerdem 2 oder mehrere der folgenden Bestandteile enthalten: einen Propylenglykolether, eine fluorierte Säure, ein Alkalisalz von Laurylsulfatether.

7. Verwendung gemäß Anspruch 2, dadurch gekennzeichnet, daß der verwendete Wirkstoff das Produkt ist, das in der Handelsform BASTA angeboten wird.

8. Verwendung gemäß einem der Ansprüche 1 bis 7, dadurch gekennzeichnet, daß die hergestellten Zusammensetzungen eine Wirkstoffmenge von geringer als 200 g/l enthalten.

9. Verwendung gemäß Anspruch 8, dadurch gekennzeichnet, daß die hergestellten Zusammensetzungen eine Wirkstoffmenge von geringer als 20 g/l enthalten.

10. Verwendung gemäß Anspruch 9, dadurch gekennzeichnet, daß die hergestellten Zusammensetzungen eine Wirkstoffmenge von geringer als 10 g/l enthalten.

11. Verwendung gemäß Anspruch 10, dadurch gekennzeichnet, daß die hergestellten Zusammensetzungen eine Wirkstoffmenge von geringer als 1 g/l enthalten.

12. Verwendung gemäß einem der Ansprüche 9, 10 oder 11, dadurch gekennzeichnet, daß der Wirkstoff das Handelsprodukt BASTA ist.

13. Verwendung gemäß einem der Ansprüche 1 bis 12, dadurch gekennzeichnet, daß die insektiziden Zusammensetzungen in als Köder bezeichnete Nahrungsmittelzusammensetzungen eingebracht werden.

14. Verwendung gemäß Anspruch 13 zur Herstellung von Ködern, dadurch gekennzeichnet, daß die Köder 0,5 bis 15 mg Glufosinat je einen Köder von 1 g enthalten.
